# EUROPEAN PATENT SPECIFICATION

(11) **EP 4 214 952 B1**
(45) Date of publication and mention of the grant of the patent: **21.10.2026**
(21) Application number: 20958353.3
(22) Date of filing: 23.10.2020
(51) Int. Cl.: H04B 7/06, H04L 5/00

(54) **BEAM MANAGEMENT FOR NON-TERRESTRIAL NETWORK (NTN)**
STRAHLVERWALTUNG FÜR NICHTTERRESTRISCHES NETZWERK (NNTN)
GESTION DE FAISCEAU POUR UN RÉSEAU NON TERRESTRE (NTN)

(43) Date of publication of application: 26.07.2023
(73) Proprietor: Apple Inc., Cupertino, CA 95014 (US)
(72) Inventor: YE, Chunxuan, San Diego, California 92131 (US); ZHANG, Dawei, Cupertino, California 95014 (US); XU, Fangli, Beijing 100022 (CN); HU, Haijing, Cupertino, California 95014 (US); SUN, Haitong, Cupertino, California 95014 (US); HE, Hong, Cupertino, California 95014 (US); NIU, Huaning, Cupertino, California 95014 (US); OTERI, Oghenekome, San Diego, California 92131 (US); VANGALA, Sarma V., Cupertino, California 95014 (US); YE, Sigen, Cupertino, California 95014 (US); ZENG, Wei, Cupertino, California 95014 (US); YANG, Weidong, San Diego, California 92131 (US); ZHANG, Yushu, Beijing 100022 (CN); JI, Zhu, Cupertino, California 95014 (US); YAO, Chunhai, Beijing 100022 (CN)
(74) Representative: COPA Copenhagen Patents
(86) International application number: PCT/CN2020/123402
(87) International publication number: WO 2022/082771

(56) References cited:
- WO-A1-2019/195060
- WO-A1-2019/199400
- CN-A- 109 391 935
- CN-A- 111 093 290
- SONY: "Discussion on beam management and BWP operation for NTN", vol. RAN WG1, no. E-meeting; 20200817 - 20200828, 7 August 2020 (2020-08-07), XP051917556, Retrieved from the Internet <URL:https://ftp.3gpp.org/tsg_ran/WG1_RL1/TSGR1_102-e/Docs/R1-2005576.zip R1-2005576.docx> [retrieved on 20200807]
- APPLE INC.: "Remaining Issues on Multi-beam operation", 3GPP DRAFT; R1-1912824, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, USA; 20191118 - 20191122, 9 November 2019 (2019-11-09), Mobile Competence Centre ; 650, route des Lucioles ; F-06921 Sophia-Antipolis Cedex ; France , XP051823624

## Description

### BACKGROUND

Mobile communication in the next generation wireless communication system, 5G, or new radio (NR) network will provide ubiquitous connectivity and access to information, as well as ability to share data, around the globe. 5G networks will be a unified, service-based framework that will target to meet versatile and sometimes, conflicting performance criteria and provide services to vastly heterogeneous application domains ranging from Non-Terrestrial Networks (NTN), Enhanced Mobile Broadband (eMBB) to massive Machine-Type Communications (mMTC), Ultra-Reliable Low-Latency Communications (URLLC), and other communications. In general, NR will evolve based on third generation partnership project (3GPP) long term evolution (LTE)-Advanced technology with additional enhanced radio access technologies (RATs) to enable seamless and faster wireless connectivity solutions.

### BRIEF DESCRIPTION OF THE DRAWINGS

FIG. 1 illustrates an architecture of a system including a Core Network (CN), for example a Fifth Generation (5G) CN (5GC), in accordance with various aspects.
FIG. 2 is a diagram illustrating example components of a device that can be employed in accordance with various aspects discussed herein.
FIG. 3 is a diagram illustrating example interfaces of baseband circuitry that can be employed in accordance with various aspects discussed herein.
FIG. 4 is a block diagram illustrating a system that facilitates power management in connection with wireless modem(s), according to various aspects discussed herein.
FIGS. 5A and 5B illustrate a base station (BS) in communication with a user equipment (UE) device over a Non-Terrestrial Network (NTN).
FIG. 6 illustrates a satellite within a new radio (NR) non-terrestrial network (NTN) with one or more beams associated with a cell 0, and one or more bandwidth parts (BWPs).
FIG. 7 illustrates a first alternative and first design of an association of synchronization signal blocks (SSBs) and an initial bandwidth part (BWP) where the SSBs of all satellite beams in the same cell are transmitted within a same frequency interval, and do not overlap in time.
FIG. 8 illustrates a first alternative and second design of an association of synchronization signal blocks (SSBs) and an initial bandwidth part (BWP) where the SSBs of all satellite beams in the same cell are transmitted within a same frequency interval, and do not overlap in time.
FIGS. 9 and 10 illustrate a second alternative of an association of synchronization signal blocks (SSBs) and a plurality of bandwidth parts (BWPs) where the SSBs of all satellite 602 beams in the same cell can be transmitted in different frequency intervals within their respective BWP, and do not overlap in time.
FIG. 11 illustrates a flow diagram of a method for a fast beam measurement in a Non-Terrestrial Network (NTN) between a user equipment (UE) and a base station (BS) using a channel state indicator-reference signals (CSI-RS) associated with all satellite beams in a single configured bandwidth part (BWP).
FIG. 12 is a flow diagram of beam measurement reporting options between steps 1104 and 1106 of FIG. 11.
FIG. 13 illustrates a flow diagram of a method for a fast beam measurement in a Non-Terrestrial Network (NTN) between a user equipment (UE) and a base station (BS) using sounding reference signals (SRSs) with no need for bandwidth part (BWP) switching.
FIG. 14 is a flow diagram for joint user equipment (UE) reception beam switching based on transmission configuration indicator (TCI) states.

### DETAILED DESCRIPTION

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone or other device configured to communicate via a 3GPP RAN, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more," unless the context indicates otherwise (e.g., "the empty set," "a set of two or more Xs," etc.).

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form. Furthermore, to the extent that the terms "including", "includes", "having", "has", "with", or variants thereof are used in either the detailed description and the claims, such terms are intended to be inclusive in a manner similar to the term "comprising." Additionally, in situations wherein one or more numbered items are discussed (e.g., a "first X", a "second X", etc.), in general the one or more numbered items can be distinct or they can be the same, although in some situations the context may indicate that they are distinct or that they are the same.

As used herein, the term "circuitry" can refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some aspects, the circuitry can be implemented in, or functions associated with the circuitry can be implemented by, one or more software or firmware modules. In some aspects, circuitry can include logic, at least partially operable in hardware.

Various aspects discussed herein can relate to facilitating wireless communication, and the nature of these communications can vary.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

Mobile communications in next generation wireless communication systems continue to include features that support efficient use of resources while simultaneously supporting higher communication bandwidths and reliability. Integration of NR Non-Terrestrial Networks (NTN) provides increased flexibility, communication diversity, and cell coverage to wireless communication systems.

Beam management for NTN come with a number of challenges when the rate that a frequency, or bandwidth part (BWP), is reused within a network such that adjacent BS or satellite beams make use of the same frequencies; which is known as a frequency reuse factor equal to or greater than one. Challenges include determination of common resource block offset, beam measurements, beam reporting, and beam switching. When different synchronization signal blocks (SSBs) are located in different bandwidth parts (BWPs) associated with different satellite beams, a common resource block offset must be determined so that the BWPs are properly referenced to a common reference point. Beam measurements can be resource intensive requiring a UE to switch between different BWPs to measure reference signals within multiple satellite beams that correspond to the different BWPs. Reporting beam measurement results can also be resource intensive resulting in multiple transmissions associated with the BWP switching. As satellites and its associated beams may be dynamic with regard to stationary UEs, as such, there are challenges with initiating beam switching that apply to a group of UEs. Lastly, there are challenges with switching physical downlink control channel (PDCCH) beams and physical downlink shared channel (PDSCH) beams jointly.

Various aspects of the present disclosure are directed toward beam management for NR NTN with a frequency reuse factor equal to or greater than one. A common resource block offset indication is presented by making use of a "SSB_subcarrieroffset" value within a master information block (MIB) and a "offsetToPointA" value within a system information block 1 (SIB1). A method of fast beam measurements that reduces resource demand by minimizing BWP switching to a single BWP switch is presented by including all channel state indicator-reference signals (CSI-RS) in a single configured BWP or no BWP switching by use of sounding reference signal (SRS) measurements of the satellite beams. Multiple beam reporting solutions are presented allowing for reporting flexibility that include layer 1-reference signal received power (L1-RSRP) reporting after the beam measurement in one or more BWPs, or consolidated reporting when switching to an initial or active BWP. Beam switching for a group of UEs is presented by use of group common downlink control information (DCI) signaling for the satellite beams, or by a broadcast medium access control control element (MAC CE) signaling for satellite beams. Lastly, joint beam switching is presented by use of a transmission configuration indicator (TCI) states or by use of a DCI format with a beam indication radio network temporary identifier (BI-RNTI).

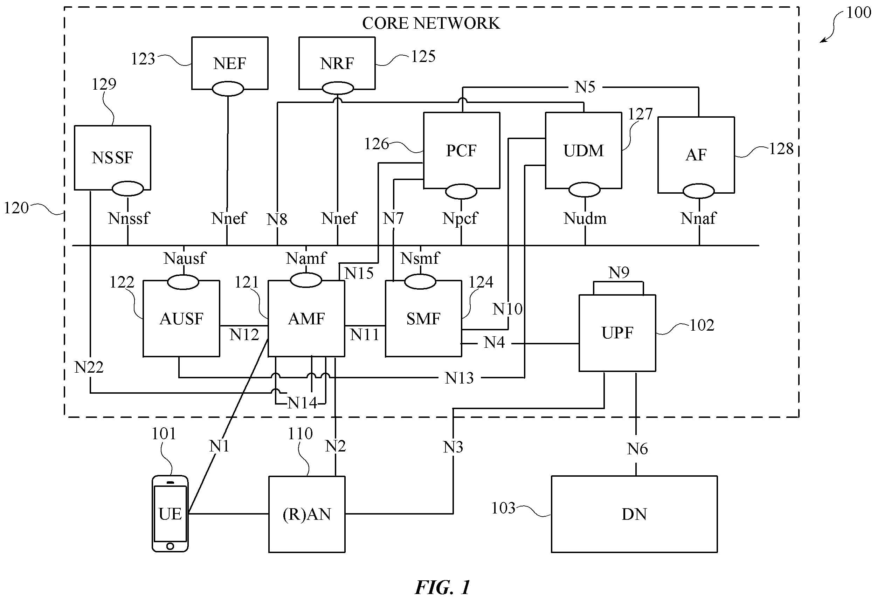

Aspects described herein can be implemented into a system using any suitably configured hardware and/or software. FIG. 1 illustrates an architecture of a system 100 including a Core Network (CN) 120, for example a Fifth Generation (5G) CN (5GC), in accordance with various aspects. The system 100 is shown to include a UE 101, which can be the same or similar to one or more other UEs discussed herein; a Third Generation Partnership Project (3GPP) Radio Access Network (Radio AN or RAN) or other (e.g., non-3GPP) AN, (R)AN 210, which can include one or more RAN nodes (e.g., Evolved Node B(s) (eNB(s)), next generation Node B(s) (gNB(s), and/or other nodes) or other nodes or access points; and a Data Network (DN) 203, which can be, for example, operator services, Internet access or third party services; and a Fifth Generation Core Network (5GC) 120. The 5GC 120 can comprise one or more of the following functions and network components: an Authentication Server Function (AUSF) 122; an Access and Mobility Management Function (AMF) 121; a Session Management Function (SMF) 124; a Network Exposure Function (NEF) 123; a Policy Control Function (PCF) 126; a Network Repository Function (NRF) 125; a Unified Data Management (UDM) 127; an Application Function (AF) 128; a User Plane (UP) Function (UPF) 102; and a Network Slice Selection Function (NSSF) 129, which can be connected by various interfaces and/or reference points, for example, as shown in FIG. 1.

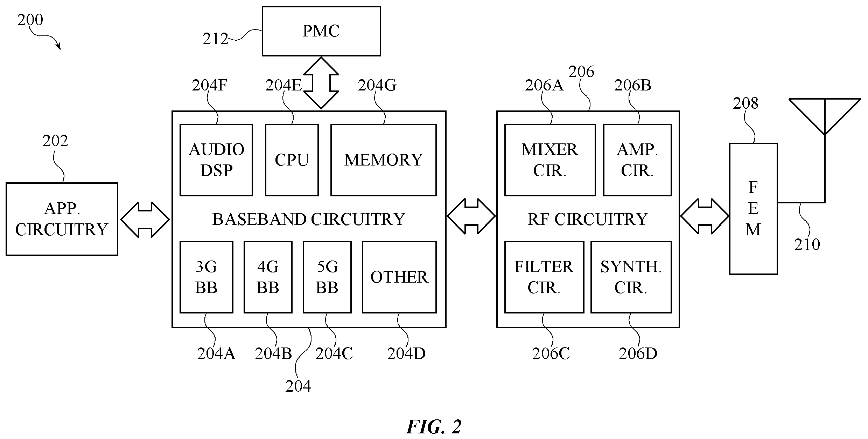

FIG. 2 illustrates example components of a device 200 in accordance with some aspects. In some aspects, the device 200 can include application circuitry 202, baseband circuitry 204, Radio Frequency (RF) circuitry 206, front-end module (FEM) circuitry 208, one or more antennas 210, and power management circuitry (PMC) 212 coupled together at least as shown. The components of the illustrated device 200 can be included in a UE or a RAN node. In some aspects, the device 200 can include fewer elements (e.g., a RAN node may not utilize application circuitry 202, and instead include a processor/controller to process IP data received from a CN such as 5GC 120 or an Evolved Packet Core (EPC)). In some aspects, the device 200 can include additional elements such as, for example, memory/storage, display, camera, sensor (including one or more temperature sensors, such as a single temperature sensor, a plurality of temperature sensors at different locations in device 200, etc.), or input/output (I/O) interface. In other aspects, the components described below can be included in more than one device (e.g., said circuitries can be separately included in more than one device for Cloud-RAN (C-RAN) implementations).

The application circuitry 202 can include one or more application processors. For example, the application circuitry 202 can include circuitry such as, but not limited to, one or more single-core or multi-core processors. The processor(s) can include any combination of general-purpose processors and dedicated processors (e.g., graphics processors, application processors, etc.). The processors can be coupled with or can include memory/storage and can be configured to execute instructions stored in the memory/storage to enable various applications or operating systems to run on the device 200. In some aspects, processors of application circuitry 202 can process IP data packets received from an EPC.

The baseband circuitry 204 can include circuitry such as, but not limited to, one or more single-core or multi-core processors. The baseband circuitry 204 can include one or more baseband processors or control logic to process baseband signals received from a receive signal path of the RF circuitry 206 and to generate baseband signals for a transmit signal path of the RF circuitry 206. Baseband circuitry 204 can interface with the application circuitry 202 for generation and processing of the baseband signals and for controlling operations of the RF circuitry 206. For example, in some aspects, the baseband circuitry 204 can include a third generation (3G) baseband processor 204A, a fourth generation (4G) baseband processor 204B, a fifth generation (5G) baseband processor 204C, or other baseband processor(s) 204D for other existing generations, generations in development or to be developed in the future (e.g., second generation (2G), sixth generation (6G), etc.). The baseband circuitry 204 (e.g., one or more of baseband processors 204A-D) can handle various radio control functions that enable communication with one or more radio networks via the RF circuitry 206. In other aspects, some or all of the functionality of baseband processors 204A-D can be included in modules stored in the memory 204G and executed via a Central Processing Unit (CPU) 204E. The radio control functions can include, but are not limited to, signal modulation/demodulation, encoding/decoding, radio frequency shifting, etc. In some aspects, modulation/demodulation circuitry of the baseband circuitry 204 can include Fast-Fourier Transform (FFT), precoding, or constellation mapping/demapping functionality. In some aspects, encoding/decoding circuitry of the baseband circuitry 204 can include convolution, tail-biting convolution, turbo, Viterbi, or Low Density Parity Check (LDPC) encoder/decoder functionality. Aspects of modulation/demodulation and encoder/decoder functionality are not limited to these examples and can include other suitable functionality in other aspects.

In some aspects, the baseband circuitry 204 can include one or more audio digital signal processor(s) (DSP(s)) 204F. The audio DSP(s) 204F can include elements for compression/decompression and echo cancellation and can include other suitable processing elements in other aspects. Components of the baseband circuitry can be suitably combined in a single chip, a single chipset, or disposed on a same circuit board in some aspects. In some aspects, some or all of the constituent components of the baseband circuitry 204 and the application circuitry 202 can be implemented together such as, for example, on a system on a chip (SOC).

In some aspects, the baseband circuitry 204 can provide for communication compatible with one or more radio technologies. For example, in some aspects, the baseband circuitry 204 can support communication with a NG-RAN, an evolved universal terrestrial radio access network (EUTRAN) or other wireless metropolitan area networks (WMAN), a wireless local area network (WLAN), a wireless personal area network (WPAN), etc. Aspects in which the baseband circuitry 204 is configured to support radio communications of more than one wireless protocol can be referred to as multi-mode baseband circuitry.

RF circuitry 206 can enable communication with wireless networks using modulated electromagnetic radiation through a non-solid medium. In various aspects, the RF circuitry 206 can include switches, filters, amplifiers, etc. to facilitate the communication with the wireless network. RF circuitry 206 can include a receive signal path which can include circuitry to down-convert RF signals received from the FEM circuitry 208 and provide baseband signals to the baseband circuitry 204. RF circuitry 206 can also include a transmit signal path which can include circuitry to up-convert baseband signals provided by the baseband circuitry 204 and provide RF output signals to the FEM circuitry 208 for transmission.

In some aspects, the receive signal path of the RF circuitry 206 can include mixer circuitry 206a, amplifier circuitry 206b and filter circuitry 206c. In some aspects, the transmit signal path of the RF circuitry 206 can include filter circuitry 206c and mixer circuitry 206a. RF circuitry 206 can also include synthesizer circuitry 206d for synthesizing a frequency for use by the mixer circuitry 206a of the receive signal path and the transmit signal path. In some aspects, the mixer circuitry 206a of the receive signal path can be configured to down-convert RF signals received from the FEM circuitry 208 based on the synthesized frequency provided by synthesizer circuitry 206d. The amplifier circuitry 206b can be configured to amplify the down-converted signals and the filter circuitry 206c can be a low-pass filter (LPF) or band-pass filter (BPF) configured to remove unwanted signals from the down-converted signals to generate output baseband signals. Output baseband signals can be provided to the baseband circuitry 204 for further processing. In some aspects, the output baseband signals can be zero-frequency baseband signals, although this is not a requirement. In some aspects, mixer circuitry 206a of the receive signal path can comprise passive mixers, although the scope of the aspects is not limited in this respect.

In some aspects, the mixer circuitry 206a of the transmit signal path can be configured to up-convert input baseband signals based on the synthesized frequency provided by the synthesizer circuitry 206d to generate RF output signals for the FEM circuitry 208. The baseband signals can be provided by the baseband circuitry 204 and can be filtered by filter circuitry 206c.

In some aspects, the mixer circuitry 206a of the receive signal path and the mixer circuitry 206a of the transmit signal path can include two or more mixers and can be arranged for quadrature downconversion and upconversion, respectively. In some aspects, the mixer circuitry 206a of the receive signal path and the mixer circuitry 206a of the transmit signal path can include two or more mixers and can be arranged for image rejection (e.g., Hartley image rejection). In some aspects, the mixer circuitry 206a of the receive signal path and the mixer circuitry 206a can be arranged for direct downconversion and direct upconversion, respectively. In some aspects, the mixer circuitry 206a of the receive signal path and the mixer circuitry 206a of the transmit signal path can be configured for super-heterodyne operation.

In some aspects, the output baseband signals and the input baseband signals can be analog baseband signals, although the scope of the aspects is not limited in this respect. In some alternate aspects, the output baseband signals and the input baseband signals can be digital baseband signals. In these alternate aspects, the RF circuitry 206 can include analog-to-digital converter (ADC) and digital-to-analog converter (DAC) circuitry and the baseband circuitry 204 can include a digital baseband interface to communicate with the RF circuitry 206.

In some dual-mode aspects, a separate radio IC circuitry can be provided for processing signals for each spectrum, although the scope of the aspects is not limited in this respect.

In some aspects, the synthesizer circuitry 206d can be a fractional-N synthesizer or a fractional N/N+1 synthesizer, although the scope of the aspects is not limited in this respect as other types of frequency synthesizers can be suitable. For example, synthesizer circuitry 206d can be a delta-sigma synthesizer, a frequency multiplier, or a synthesizer comprising a phase-locked loop with a frequency divider.

The synthesizer circuitry 206d can be configured to synthesize an output frequency for use by the mixer circuitry 206a of the RF circuitry 206 based on a frequency input and a divider control input. In some aspects, the synthesizer circuitry 206d can be a fractional N/N+1 synthesizer.

In some aspects, frequency input can be provided by a voltage controlled oscillator (VCO), although that is not a requirement. Divider control input can be provided by either the baseband circuitry 204 or the application circuitry 202 depending on the desired output frequency. In some aspects, a divider control input (e.g., N) can be determined from a look-up table based on a channel indicated by the application circuitry 202.

Synthesizer circuitry 206d of the RF circuitry 206 can include a divider, a delay-locked loop (DLL), a multiplexer and a phase accumulator. In some aspects, the divider can be a dual modulus divider (DMD) and the phase accumulator can be a digital phase accumulator (DPA). In some aspects, the DMD can be configured to divide the input signal by either N or N+1 (e.g., based on a carry out) to provide a fractional division ratio. In some example aspects, the DLL can include a set of cascaded, tunable, delay elements, a phase detector, a charge pump and a D-type flip-flop. In these aspects, the delay elements can be configured to break a VCO period up into Nd equal packets of phase, where Nd is the number of delay elements in the delay line. In this way, the DLL provides negative feedback to help ensure that the total delay through the delay line is one VCO cycle.

In some aspects, synthesizer circuitry 206d can be configured to generate a carrier frequency as the output frequency, while in other aspects, the output frequency can be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some aspects, the output frequency can be a LO frequency (fLO). In some aspects, the RF circuitry 206 can include an IQ/polar converter.

FEM circuitry 208 can include a receive signal path which can include circuitry configured to operate on RF signals received from one or more antennas 210, amplify the received signals and provide the amplified versions of the received signals to the RF circuitry 206 for further processing. FEM circuitry 208 can also include a transmit signal path which can include circuitry configured to amplify signals for transmission provided by the RF circuitry 206 for transmission by one or more of the one or more antennas 210. In various aspects, the amplification through the transmit or receive signal paths can be done solely in the RF circuitry 206, solely in the FEM circuitry 208, or in both the RF circuitry 206 and the FEM circuitry 208.

In some aspects, the FEM circuitry 208 can include a TX/RX switch to switch between transmit mode and receive mode operation. The FEM circuitry can include a receive signal path and a transmit signal path. The receive signal path of the FEM circuitry can include an LNA to amplify received RF signals and provide the amplified received RF signals as an output (e.g., to the RF circuitry 206). The transmit signal path of the FEM circuitry 208 can include a power amplifier (PA) to amplify input RF signals (e.g., provided by RF circuitry 206), and one or more filters to generate RF signals for subsequent transmission (e.g., by one or more of the one or more antennas 210).

In some aspects, the PMC 212 can manage power provided to the baseband circuitry 204. In particular, the PMC 212 can control power-source selection, voltage scaling, battery charging, or DC-to-DC conversion. The PMC 212 can often be included when the device 200 is capable of being powered by a battery, for example, when the device is included in a UE. The PMC 212 can increase the power conversion efficiency while providing desirable implementation size and heat dissipation characteristics.

While FIG. 2 shows the PMC 212 coupled only with the baseband circuitry 204. However, in other aspects, the PMC 212 may be additionally or alternatively coupled with, and perform similar power management operations for, other components such as, but not limited to, application circuitry 202, RF circuitry 206, or FEM circuitry 208.

In some aspects, the PMC 212 can control, or otherwise be part of, various power saving mechanisms of the device 200. For example, if the device 200 is in an RRC_Connected state, where it is still connected to the RAN node as it expects to receive traffic shortly, then it can enter a state known as Discontinuous Reception Mode (DRX) after a period of inactivity. During this state, the device 200 can power down for brief intervals of time and thus save power.

If there is no data traffic activity for an extended period of time, then the device 200 can transition off to an RRC_Idle state, where it disconnects from the network and does not perform operations such as channel quality feedback, handover, etc. The device 200 goes into a very low power state and it performs paging where again it periodically wakes up to listen to the network and then powers down again. The device 200 may not receive data in this state; in order to receive data, it can transition back to RRC_Connected state.

An additional power saving mode can allow a device to be unavailable to the network for periods longer than a paging interval (ranging from seconds to a few hours). During this time, the device is totally unreachable to the network and can power down completely. Any data sent during this time incurs a large delay and it is assumed the delay is acceptable.

Processors of the application circuitry 202 and processors of the baseband circuitry 204 can be used to execute elements of one or more instances of a protocol stack. For example, processors of the baseband circuitry 204, alone or in combination, can be used execute Layer 3, Layer 2, or Layer 1 functionality, while processors of the application circuitry 202 can utilize data (e.g., packet data) received from these layers and further execute Layer 4 functionality (e.g., transmission communication protocol (TCP) and user datagram protocol (UDP) layers). As referred to herein, Layer 3 can comprise a radio resource control (RRC) layer, described in further detail below. As referred to herein, Layer 2 can comprise a medium access control (MAC) layer, a radio link control (RLC) layer, and a packet data convergence protocol (PDCP) layer, described in further detail below. As referred to herein, Layer 1 can comprise a physical (PHY) layer of a UE/RAN node, described in further detail below.

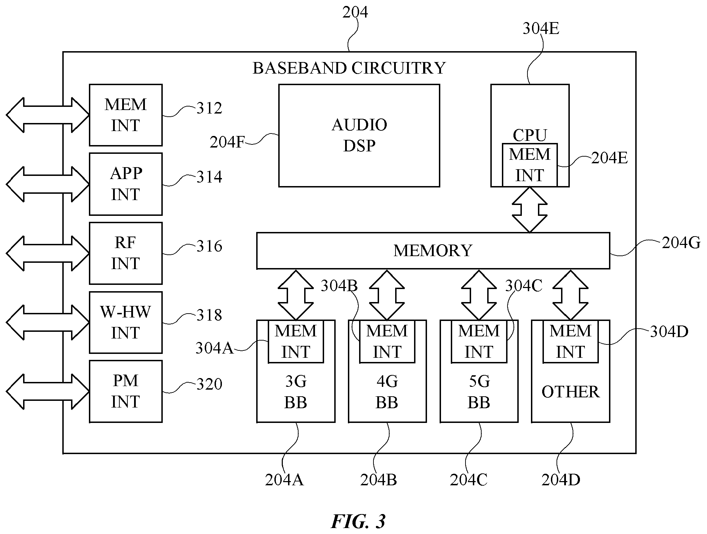

FIG. 3 illustrates example interfaces of baseband circuitry in accordance with some aspects. As discussed above, the baseband circuitry 204 of FIG. 2 can comprise processors 204A-204E and a memory 204G utilized by said processors. Each of the processors 204A-204E can include a memory interface, 304A-304E, respectively, to send/receive data to/from the memory 204G.

The baseband circuitry 204 can further include one or more interfaces to communicatively couple to other circuitries/devices, such as a memory interface 312 (e.g., an interface to send/receive data to/from memory external to the baseband circuitry 204), an application circuitry interface 314 (e.g., an interface to send/receive data to/from the application circuitry 202 of FIG. 2), an RF circuitry interface 316 (e.g., an interface to send/receive data to/from RF circuitry 206 of FIG. 2), a wireless hardware connectivity interface 318 (e.g., an interface to send/receive data to/from Near Field Communication (NFC) components, Bluetooth^{®} components (e.g., Bluetooth^{®} Low Energy), Wi-Fi^{®} components, and other communication components), and a power management interface 320 (e.g., an interface to send/receive power or control signals to/from the PMC 212).

As discussed in greater detail herein, various aspects, which can be employed, for example, at a UE, can facilitate power management in connection with wireless modem(s). Various aspects can employ power management techniques discussed herein, wherein, based on monitored levels of power consumption and temperature, one or more power management stages discussed herein can be employed to mitigate overheating. Power management stages discussed herein can reduce power consumption and associated overheating caused by 5G (Fifth Generation) NR (New Radio) operation, LTE (Long Term Evolution) operation, or both.

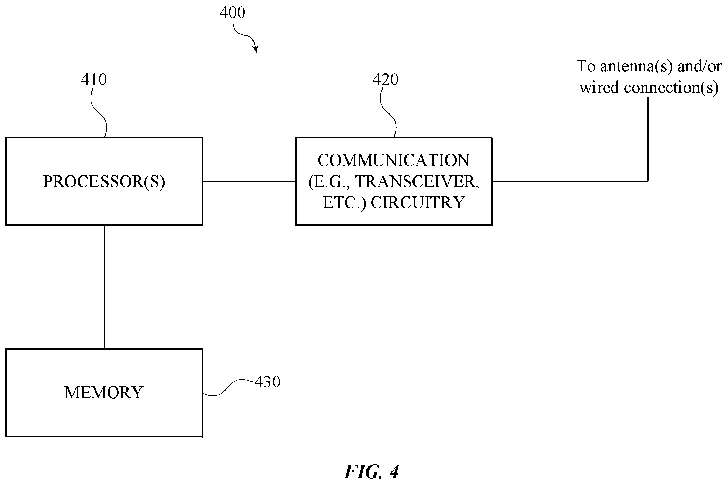

Referring to FIG. 4, illustrated is a block diagram of a system 400 employable at a UE (User Equipment), a next generation Node B (gNodeB or gNB) or other BS (base station)/TRP (Transmit/Receive Point), or another component of a 3GPP (Third Generation Partnership Project) network (e.g., a 5GC (Fifth Generation Core Network)) component or function such as a UPF (User Plane Function)) that facilitates power management in connection with wireless modem(s), according to various aspects discussed herein. System 400 can include processor(s) 410, communication circuitry 420, and memory 430. Processor(s) 410 (e.g., which can comprise one or more of 202 and/or 204A-204F, etc.) can comprise processing circuitry and associated interface(s) (e.g., a communication interface (e.g., RF circuitry interface 316) for communicating with communication circuitry 420, a memory interface (e.g., memory interface 312) for communicating with memory 430, etc.). Communication circuitry 420 can comprise, for example circuitry for wired and/or wireless connection(s) (e.g., 206 and/or 208), which can include transmitter circuitry (e.g., associated with one or more transmit chains) and/or receiver circuitry (e.g., associated with one or more receive chains), wherein transmitter circuitry and receiver circuitry can employ common and/or distinct circuit elements, or a combination thereof). Memory 430 can comprise one or more memory devices (e.g., memory 204G, local memory (e.g., including CPU register(s)) of processor(s) discussed herein, etc.) which can be of any of a variety of storage mediums (e.g., volatile and/or non-volatile according to any of a variety of technologies/constructions, etc.), and can store instructions and/or data associated with one or more of processor(s) 410 or transceiver circuitry of the communication circuitry 420).

Specific types of aspects of system 400 (e.g., UE aspects) can be indicated via subscripts (e.g., system 400_{UE} comprising processor(s) 410_{UE}, communication circuitry 420_{UE}, and memory 430_{UE}). In some aspects, such as BS aspects (e.g., system 400_{gNB}) and network component (e.g., UPF (User Plane Function), etc.) aspects (e.g., system 400_{UPF}) processor(s) 410_{gNB} (etc.), communication circuitry (e.g., 420_{gNB}, etc.), and memory (e.g., 430_{gNB}, etc.) can be in a single device or can be included in different devices, such as part of a distributed architecture. In aspects, signaling or messaging between different aspects of system 400 (e.g., 400₁ and 400₂) can be generated by processor(s) 410₁, transmitted by communication circuitry 420₁ over a suitable interface or reference point (e.g., a 3GPP air interface, N3, N4, etc.), received by communication circuitry 420₂, and processed by processor(s) 410₂. Depending on the type of interface, additional components (e.g., antenna(s), network port(s), etc. associated with system(s) 400₁ and 400₂) can be involved in this communication.

In various aspects, one or more of information (e.g., system information, resources associated with signaling, etc.), features, parameters, etc. can be configured to a UE via signaling (e.g., associated with one or more layers, such as L1 signaling or higher layer signaling (e.g., MAC, RRC, etc.)) from a gNB or other access point (e.g., via signaling generated by processor(s) 410_{gNB}, transmitted by communication circuitry 420_{gNB}, received by communication circuitry 420_{UE}, and processed by processor(s) 410_{UE}). Depending on the type of information, features, parameters, etc., the type of signaling employed and/or the exact details of the operations performed at the UE and/or gNB in processing (e.g., signaling structure, handling of PDU(s)/SDU(s), etc.) can vary. However, for convenience, such operations can be referred to herein as configuring information/feature(s)/parameter(s)/etc. to a UE, generating or processing configuration signaling, or via similar terminology.

The 3GPP (Third Generation Partnership Project) technical specifications (TSs) define optional power management related messages between a UE (User Equipment) and Base Station (BS, e.g., eNB (Evolved Node B) or gNB (next generation Node B), etc.).

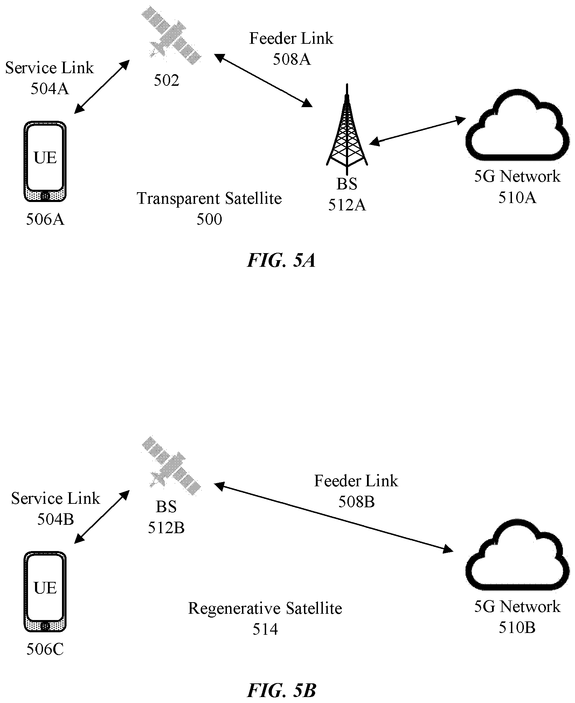

FIGS. 5A and 5B illustrate a base station (BS) in communication with a user equipment (UE) device over a Non-Terrestrial Network (NTN) according to some embodiments. FIG. 5A illustrates UE 506A that can be in communication with a 5G core network 510A. In some embodiments, the UE 506A can be in communication with a satellite 502 via a service link 504A, where the satellite 502 is in communication with the 5G core network 510A via a feeder link 508A and BS 512A.

FIG. 5B illustrates UE 506C that can be in communication with a 5G core network 510B. In some embodiments, the UE 506C can be in communication with the satellite that is a BS 512B via service link 504B, where the BS 512B is in communication with the 5G core network 510B via a feeder link 508B.

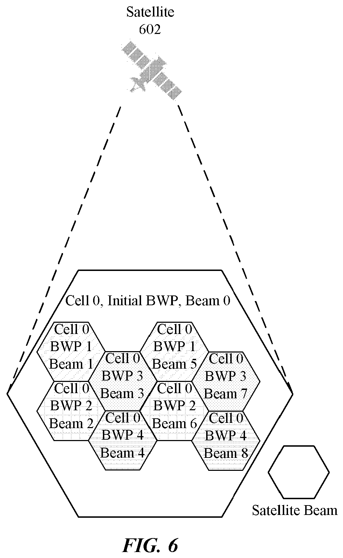

FIG. 6 illustrates a satellite 602 within a new radio (NR) non-terrestrial network (NTN) with one or more beams associated with a cell 0, and one or more bandwidth parts (BWPs) that carry one or more synchronization signal blocks (SSBs). The satellite 602 can be a base station (BS). It is noted that the SSBs can initialize synchronization information and broadcast information that corresponds to the cell beam direction. One or more user equipment's (UEs) can be in communication with the satellite 602 through one or more of the beams associated with the cell 0. Beam 0 can include coverage of the one or more beams and may be used to transmit system information with an initial BWP that may include initial access and signaling information that covers the cell 0.

Adjacent beams could have inter-beam interference. To reduce inter-beam interference, adjacent beams may have a different BWP. As such, non-adjacent beams can re-use the BWP resulting in a frequency reuse factor equal to or greater than one. For example, beams 1 through 4 are adjacent and can have different BWPs, i.e. BWP 1 through 4 respectively, to mitigate interference. As beams 5 and 6 are not adjacent to beams 1 and 2, beams 5 and 6 can reuse BWPs 1 and 2 respectively. By re-using BWPs, the network mitigates adjacent beam interference and the network makes use of a smaller number of potential SSB frequencies for the UEs to search for thereby reducing initial access time.

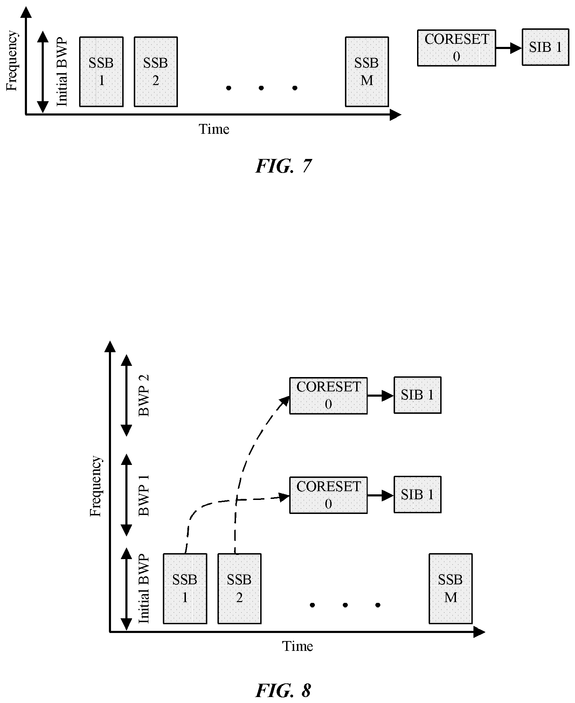

FIG. 7 illustrates a first alternative and first design of an association of SSBs and an initial BWP where the SSBs of all satellite 602 beams in the same cell are transmitted within a same frequency interval, and do not overlap in time. In the first alternative and first design, all SSBs point to a common control resource set 0 (CORESET 0) and search space 0 with a common system information block 1 (SIB1) that is common for all satellite beams. The first alternative and first design applied to Figure 6 would result in a modified Figure 6 scenario where each beam makes use of the same BWP and thus the same frequencies. SSB M represents a pre-configured number M of SSBs associated with the number of satellite 602 beams and discretization of the initial BWP as depicted in Fig. 6.

FIG. 8 illustrates a first alternative and second design of an association of SSBs and an initial BWP where the SSBs of all satellite 602 beams in the same cell are transmitted within a same frequency interval, and do not overlap in time, and with common control resource sets 0 (CORESET 0) in different BWPs. In the first alternative and second design, the SSBs can point to a CORESET 0 and SIB 1 that can occupy different frequency intervals by occupying different BWPs associated with a particular beam of satellite 602. Each SIB1 includes a configuration data for its associated beams of satellite 602, and potentially other satellite beams. For example, SSB1 in the initial BWP may point to a CORESET 0 and SIB1 in BWP 1, and SSB 2 may point to a different CORESET 0 and SIB1 in BWP 2 where each different SIB1 includes configuration data associated with its BWP and satellite 602 beam.

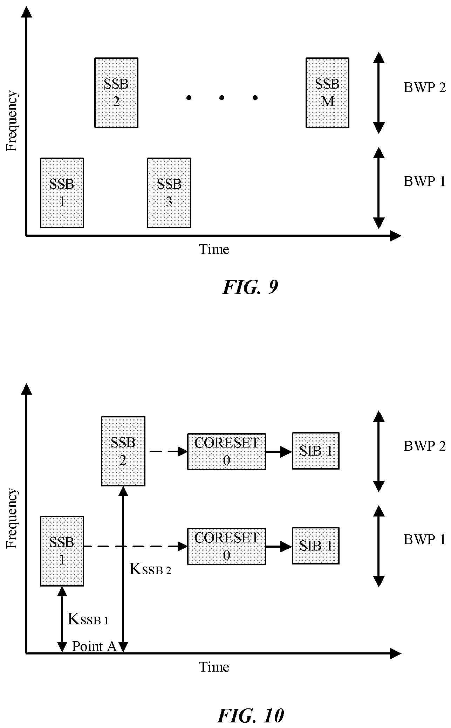

FIGS. 9 and 10 illustrate a second alternative of an association of SSBs and a plurality of BWPs where the SSBs of all satellite 602 beams in the same cell can be transmitted in different frequency intervals within their respective BWP, and do not overlap in time. FIGS. 9 and 10 further depict a time varying aspect of the BWPs in FIG. 6 where non-adjacent beams can re-use the BWP resulting in a frequency reuse factor equal to or greater than one. While FIGS. 9 and 10 show SSBs distributed amongst BWP 1 and BWP 2, it is appreciated that SSBs may be distributed amongst a plurality of BWP that can extend to a pre-configured number N, i.e. BWP 1 through BWP N. As such, SSB 3 could be in BWP 3, and a SSB 4 could be in BWP 4, and so on.

FIG. 10 illustrates CORESET 0 and SIB1 allocations within the second alternative. Each SSB has a configuration of CORESET 0, search space 0, and SIB1 associated with the BWP that the particular SSB resides. Each SIB1 includes the configuration for its associated satellite beam and potentially other satellite beams. For example, SSB 1 is in BWP 1 and SSB 1 is associated with CORESET 0 and SIB1 that are also in BWP 1. SSB 2 is in BWP 2 and SSB 2 is associated with CORESET 0 and SIB1 that are also in BWP 2.

One challenge with a SSBs allocated in different BWPs is that of determining a common resource block offset such that subcarrier 0 of a SSB can be referenced to subcarrier 0 in a common resource block, i.e. Point A as depicted in FIG. 10. FIG. 10 depicts offsets K_{SSB 1} and K_{SSB 2} from SSB 1 in BWP 1 to Point A and SSB 2 in BWP 2 to Point A respectively. The quantity K_{SSB M} can be the subcarrier frequency domain offset between subcarrier 0 of SSB M and Point A.

In some aspects, a common resource block offset indication can be achieved by making use of a "SSB_subcarrieroffset" value within a master information block (MIB) and a "offsetToPointA" value within a system information block 1 (SIB1) which are provided by the satellite 602. The UE can decode an SSB that contains the MIB pointing to CORESET 0 by which the UE can decode the SIB1, and from the MIB and SIB1, calculate offset K_{SSB}. The MIB can contain the "SSB_subcarrieroffset" with values [0, 15] associated with the 4-least significant bits (4-LSB) of the K_{SSB}. The SIB1 can contain "offsetToPointA" with values [0, 2199] for the most significant bits (MSB) of the offset K_{SSB}. As such, the UE can calculate offset K_{SSB} based on the contents of the "SSB_subcarrieroffset" of the MIB and "offsetToPointA" of the SIB1 associated with a particular SSB within a particular BWP. This aspect of calculating offset K_{SSB} can apply to the first alternative in FIGS. 7 and 8, and the second alternative in FIGS. 9 and 10.

The satellite 602 may indicate different K_{SSB} offsets for different BWPs. In an alternative aspect, K_{SSB} may be calculated by a UE where the satellite 602 uses the same "SSB_subcarrieroffset" in the MIB among all SSBs in a cell, and the satellite 602 assigns different "offsetToPointA" values in SIB1s corresponding to different BWPs. This aspect of calculating offset K_{SSB} can apply to the second alternative in FIGS. 9 and 10.

In an alternative aspect, K_{SSB} may be calculated by a UE where the satellite 602 may assign different "SSB_subcarrieroffset" in the MIBs and different "offsetToPointA" in the SIB1s corresponding to different BWPs in a cell. This aspect of calculating offset K_{SSB} can apply to the second alternative in FIGS. 9 and 10.

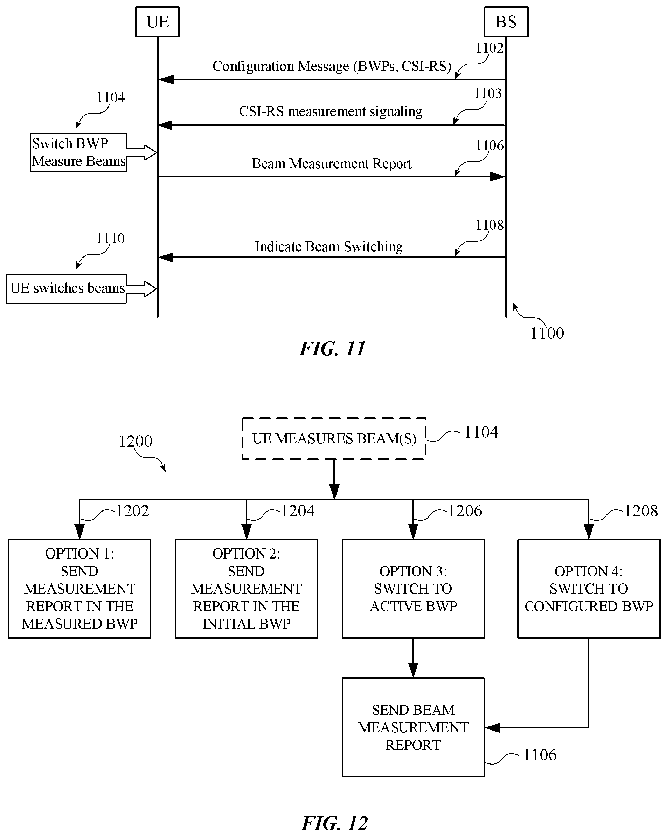

FIG. 11 illustrates a flow diagram of a method 1100 for a fast beam measurement in a NTN between a UE and a BS using a channel state indicator-reference signals (CSI-RS) associated with all satellite 602 beams in a single configured BWP. At 1102, the BS, which can be satellite 602, sends a configuration message to the UE that can include configuration of one or more of a CSI-RS, BWPs, SSBs, CORESET 0's, and SIB1's associated with BS beams of a cell, e.g. cell 0 of FIG. 6. The configured CSI-RS contain a beam measurement configuration, such as for all beams and associated BWPs within a cell. At 1103, the BS can send CSI-RS signaling to the UE with an indication for the UE to conduct CSI-RS measurements. After 1103, the UE may connect to a configured BWP.

At 1104, the UE switches from a first BWP to a second BWP and conducts beam measurements of all cell beams or a group of cell beams according to the CSI-RS configuration containing beam measurement configuration, such as for all beams, where the CSI-RS configuration is in the second BWP. As such, a CSI-RS does not appear in every BWP, and may only appear in a single configured BWP. Alternatively the CSI-RS may contain the measurement configuration for a subset of all the beams, and thus, there may be more than one BWP configured with CSI-RS configurations associated with groups of beam measurements. It is appreciated that the UE may measure beams and switch BWPs in various different orders. For example, the UE may measure the beam associate with the first BWP, and one or more other beams according to the CSI-RS configuration, then switch to the second BWP. Alternatively, the UE may switch from the first BWP to the second BWP, then measure one or more beams according to the CSI-RS configuration.

In some aspects the UE may be in the second BWP (e.g. BWP 2 associated with beam 2 of Fig. 6), and the first BWP may be the initial BWP which may be the configured BWP, and the UE may conduct a single BWP switch from a second BWP to the first BWP (e.g. Initial BWP associated with beam 0 of Fig. 6); where one or more beams in the cell are measured according to the CSI-RS in the initial BWP. In another aspect, the UE may be in the first BWP (e.g. BWP 1 associated with beam 1 of Fig. 6) where the UE may conduct a single BWP switch from the first BWP to a second BWP (e.g. BWP 3 associated with beam 3 of Fig. 6) which may be the configured BWP; where one or more beams in the cell are measured according to the CSI-RS in the second BWP. If the CSI-RS configuration contains the beam measurement configuration for all beams, then all beams in the cell are measured with a single BWP switch.

At 1106 the UE may send a beam measurement report to the BS where the measurement report includes beam measurement data conducted at 1104 according to the CSI-RS. Specifics of beam measurement reporting at 1106 will be discussed in further detail below.

At 1108, the BS may send an indication to switch beams to the UE according to the measurement report. Specifics of measurement beam switching at 1108 will be discussed din further detail below.

FIG. 12 is a flow diagram 1200 of beam measurement reporting options between steps 1104 and 1106 of FIG. 11. At 1202, Option 1, beam measurement reporting can occur in the measured BWP. The UE can send a measurement report according to the CSI-RS configuration containing beam measurement configuration for all beams or a group of beams in the particular BWP that the UE was in at the time of measurements, e.g. the first or second BWP. The beam measurement report can include the L1-RSRP for the measured one or more beams in each BWP. Option 1 can be suited to scenarios where the particular BWP includes CSI-RS for all beams or a subset of beams.

At 1204, Option 2, the UE may send the beam measurement report in the initial BWP. All CSI-RS configurations containing beam measurement configurations may be in the initial BWP, and all SSBs may be in the initial BWP. As such, the UE would report the beam measurement report in the initial BWP. Option 2 can be suited to the case where the initial BWP includes CSI-RS for all beams or a subset of beams.

At 1206, Option 3, the UE may switch to the first BWP to send the beam measurement report. The first BWP can be the active BWP that the UE was in prior to initiating beam measurements. After conducting beam measurements, the UE can switch back to the active BWP, then send the beam measurement report at 1106 according to the CSI-RS configuration containing the beam measurement configuration for all beams or a group of beams. The beam measurement report can include the L1-RSRP for the measured one or more beams in each BWP.

At 1208, Option 4, the UE can switch to a configured BWP. The configured BWP can be a designated BWP for beam measurement reporting, or a network configured BWP that is suited for beam measurement reporting that, for example, a larger BWP or a BWP with a light traffic load. After the UE conducts beam measurements according to the CSI-RS configuration containing the beam measurement configuration for all beams or a group of beams at 1104, the UE can switch to the configured BWP at 1208, then send the beam measurement report at 1106. The beam measurement report can include the L1-RSRP for the measured one or more beams.

It is noted that the CSI-RS configuration could be periodic or semi-persistent. The BS can provide the beam measurement reporting method, i.e. Options 1-4, to the UE, additionally, the beam measurement reporting method could include multiple reporting mechanisms, and can be pre-configured by a standard. The BS can communicate Options 1-4 to the UE via a "CSI-ReportConfig" that includes a "BWP-ID" parameter.

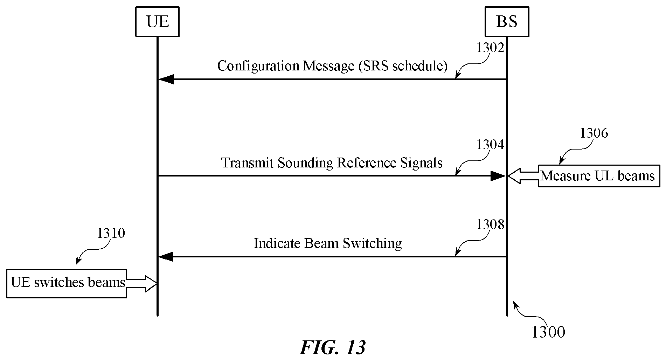

FIG. 13 illustrates a flow diagram of a method 1300 for a fast beam measurement in a NTN between a UE and a BS using sounding reference signals (SRSs) with no need for BWP switching. At 1302, the BS, which can be satellite 602, sends a configuration message to the UE that can include one or more of the configuration recited at 1102 of FIG. 11, a SRS configuration that includes a SRS schedule, and a configuration for beam correspondence. After reception of the configuration message at 1302, the UE can configure beam correspondence with the BS where uplink and downlink reciprocity of beam channels are configured. After 1302, the UE can also connect to a configured BWP.

At 1304, the UE may transmit one or more SRS to the BS according to the SRS schedule. The UE transmits the one or more SRS only in the BWP that the UE is connected to, e.g. the active BWP. The SRS transmissions may be repeated such that the BS can measure one or more the uplink (UL) beams at 1306, according to a repetition value indicated by the SRS schedule. One or more of the repetition value or a number of symbols for the SRS may depend on one or more of the UE location, the number of neighbor beams in the cell, and other factors as configured by the BS. Furthermore, at 1304, the UE may transmit the one or more SRS to the BS in different beam directions such that the BS measures the UL beams with one or more BS beams.

At 1308, the BS can indicate beam switching to the UE based on the one or more SRS. Method 1300 can occur without any BWP switching, and thus can benefit from resource reduction associated with BWP switching.

NTN beam switching may benefit from UE group based switching. A satellite 602 may be moving with respect to a group of UEs and thus the beams associated with the satellite 602 is also moving which may create a scenario where a group of UEs should switch beams simultaneously to maintain communication with the satellite 602 due to the change in beam coverage areas. For example, a group of UEs may benefit from simultaneous beam switching at 1308 of Fig. 13, at 1108 of Fig. 11, or in other suitable scenarios.

To facilitate UE group beam switching, the BS, which can be a satellite 602, may configure a group common DCI format associated with UE group beam switching, and indicate the group common DCI format to the UEs in a particular group.

In an alternative aspect, the BS may configure a joint group common DCI format associated with UE group beam switching. The joint group common DCI format may use Format 2_2 for transmission of transmit power control (TPC) commands for physical uplink control channel (PUCCH) and physical uplink shared channel (PUSCH) to indicate UE group beam switching and uplink power control information to the group of UEs.

The BS may generate UE groups to apply the group common DCI or joint group common DCI. UE groups can be based on one or more factors that could include a UE location and UE beam measurement results. UEs in a generated group can be assigned a radio network temporary identifier (RNTI) associate with common beam switching to scramble the group common DCI or joint group common DCI. The RNTI associated with common beam switching can be sent by the BS to the UEs in a UE group via MAC CE or a dedicated radio resource control (RRC) message.

The BS may apply UE group member update triggers to UEs. Update triggers may include one or more of a change in location of a UE and a change in beam measurement results from a UE.

In an alternative aspect, rather than using the group common DCI or joint group common DCI formats for UE group beam switching, the BS may broadcast a MAC CE for beam switching, i.e. satellite 602 beam switching. The MAC CE for beam switching would indicate to a particular set of UEs to change beams.

The group common DCI, joint group common DCI, or MAC CE for beam switching can be indicated by the BS to the UE at 1308 of Fig. 13, at 1108 of Fig. 11, or in other suitable NTN beam switching scenarios.

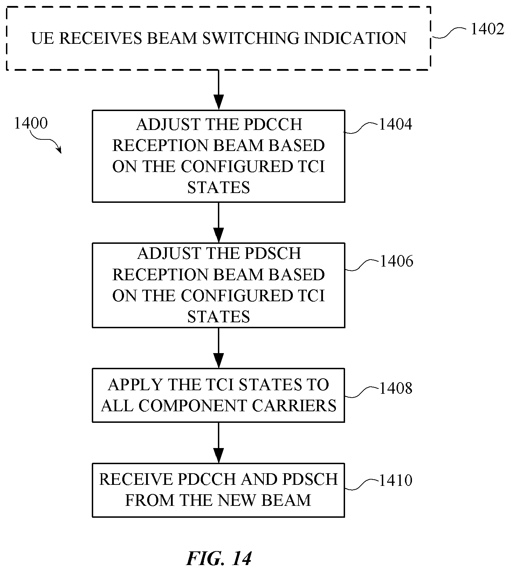

FIG. 14 is a flow diagram 1400 for joint UE reception beam switching based on transmission configuration indicator (TCI) states. Joint beam switching refers switching reception beams of a UE which can be both a PDCCH beam (i.e. control beam) and PDSCH beam (i.e. data beam). The BS can configure a TCI state for both PDCCH and PDSCH beams when the BS indicates beam switching, for example at 1308 of Fig. 13, at 1108 of Fig. 11, or in other suitable NTN beam switching scenarios. The BS can configure TCI states within the CORESET configuration which is indicated by SIB1, for example, SIB1 associated with CORESET 0 associated with SSB 1 in BWP 1 of Fig. 10 which can be associated with Beam 1 of Fig. 6. SIB1 can include the CORESET configuration for all satellite beams.

At 1402, the UE may receive an indication to switch beams from the BS including a configuration of TCI states for reception beam switching. 1402 may be associated with 1308 of Fig. 13, 1108 of Fig. 11, or another suitable NTN beam switching scenario. At 1404, the UE may adjust the PDCCH reception beam to a new beam based on the configured TCI states. At 1406, the UE may adjust the PDSCH reception beam to a new beam based on the configured TCI states. At 1408, the TCI states may be applied to one or more component carriers and cell groups. At 1410, the UE may receive an updated PDCCH and PDSCH from the new beam.

The indication of the new beam for PDCCH can be configured via RRC with a CORESET with one or more candidate TCI states or via MAC CE indicating a specific PDCCH TCI state. The indication of the new beam for PDSCH can be configured via DCI with a 3-bit TCI field indicating the new beam, or the new beam for PDSCH can follow the same beam as indicated in the PDCCH TCI state.

The joint UE reception beam switching based on TCI states can apply to one or more of individual UEs or UE groups.

In an alternative aspect, one or more of downlink (DL) beams, uplink (UL) beams, PDCCH beam (i.e. control beam) and PDSCH beam (i.e. data beam), can be indicated by a TCI beam switching signal carried by a DCI format associated with beam switching. The DCI format to indicate TCI beam switching may be scrambled by a beam indication RNTI (BI-RNTI). The BS can configure and send the BI-RNTI via RRC signaling for one or more UEs. The BS can use a MAC CE to update the BI-RNTI for one or more UEs.

The BS can configure the TCI signaling with switching delays for the UE. The BS can configure a M slot delay for a UE indicated with a TCI associated with a new BWP, where the UE would wait M slots after receiving the BI-RNTI DCI before switching to a new TCI and a new BWP. The BS can configure a N slot delay for a UE indicated with a TCI associated within a current active BWP, where the UE would wait N slots after receiving the BI-RNTI DCI before switching to a new TCI and the current active BWP. The M slot and N slot delays could be predefined by a standard, configured by higher layer signaling, or reported by the UE.

In an alternative aspect, rather than sending the TCI signaling via RRC from the BS to the UE, the BS can send the TCI signaling to the UE via MAC CE. A UE indicated with a TCI associated with a new BWP would wait M slots after the UE transmits an acknowledgment (ACK) for the MAC CE before switching to a new TCI and a new BWP. A UE indicated with a TCI associated within a current active BWP would wait N slots after the UE transmits an acknowledgment (ACK) for the MAC CE before switching to a new TCI and the current active BWP.

The BI-RNTI DCI beam switching signaling can apply to one or more of individual UEs or UE groups and can apply, for example, be associated with one or more of 1402 of Fig. 14, 1308 of Fig. 13, 1108 of Fig. 11, or another suitable NTN beam switching scenario.

### Additional Examples Not Claimed but Useful for Understanding the Invention

Examples herein can include subject matter such as a method, means for performing acts or blocks of the method, at least one machine-readable medium including executable instructions that, when performed by a machine (e.g., a processor (e.g., processor, etc.) with memory, an application-specific integrated circuit (ASIC), a field programmable gate array (FPGA), or the like) cause the machine to perform acts of the method or of an apparatus or system for concurrent communication using multiple communication technologies according to aspects and examples described.

Example 1 is a baseband processor, comprising: a memory interface; and processing communicatively coupled to the memory and transceiver interface and, while connected to a base station (BS) within a cell of a non-terrestrial network (NTN) and, where the cell comprises a plurality of bandwidth parts (BWPs) associated with a plurality of beams, configured to perform operations comprising: receiving a signaling from the base station (BS) comprising a channel state indicator reference signal (CSI-RS) configuration associated with a first BWP of the plurality of BWPs, where the CSI-RS configuration comprises a beam measurement configuration for the plurality of beams, switching from a second BWP of the plurality of BWPs to the first BWP according to the CSI-RS configuration and measure one or more of the plurality of beams according to the beam measurement configuration; and generating a measurement report that includes a layer 1 reference signal received power (L1-RSRP) measurement from the measured one or more of the plurality of beams.

Example 2 comprises the subject matter of example 1, wherein the operations further comprise selectively receiving an indication to switch to one of the plurality of beams based on the measurement report.

Example 3 comprises the subject matter of example 1, wherein the plurality of BWPs associated with the plurality of beams is configured with a frequency reuse factor equal to or greater than one.

Example 4 comprises the subject matter of example 1, wherein the CSI-RS configuration appears in only a single BWP of the plurality of BWPs within the cell.

Example 5 comprises the subject matter of example 1, wherein the operations further comprise measuring a subset of the plurality of beams according to the beam measurement configuration.

Example 6 comprises the subject matter of example 1, wherein the operations further comprise measuring all of the plurality of beams according to the beam measurement configuration.

Example 7 comprises the subject matter of example 1, wherein the first BWP is an initial BWP, and the CSI-RS configuration is in the initial BWP.

Example 8 comprises the subject matter of example 7, wherein the operations further comprise generating the measurement report in the initial BWP.

Example 9 comprises the subject matter of example 1, wherein the operations further comprise generating the measurement report in the first BWP that is associated with the CSI-RS configuration.

Example 10 comprises the subject matter of example 1, wherein the operations further comprise, after measuring the one or more of the plurality of beams, switching to an active BWP, where the active BWP is the second BWP, before generating the measurement report.

Example 11 comprises the subject matter of example 1, wherein the operations further comprise, after measuring the one or more of the plurality of beams, switching to a configured BWP of the plurality of BWPs that is different from the first BWP and second BWP, before generating the measurement report.

Example 12 is a base station (BS) device, comprising: a memory interface; an antenna; a transceiver interface connected to the antenna; and a processor communicatively coupled to the memory and transceiver interface configured to: configure a plurality of bandwidth parts (BWPs) associated with a plurality of beams in a cell associated with a non-terrestrial network (NTN), generate a channel state indicator reference signal (CSI-RS) configuration associated with a first BWP of the plurality of BWPs, where the CSI-RS configuration comprises a beam measurement configuration for the plurality of beams, receive a measurement report that includes a layer 1 reference signal received power (L1-RSRP) measurement from the measured one or more of the plurality of beams; and selectively generate an indication to switch to one of the plurality of beams based on the measurement report.

Example 13 comprises the subject matter of example 12, wherein the BS is a satellite.

Example 14 comprises the subject matter of example 12, wherein the plurality of BWPs associated with the plurality of beams is configured with a frequency reuse factor equal to or greater than one.

Example 15 comprises the subject matter of example 12, wherein only a single BWP of the plurality of BWPs comprises the CSI-RS configuration.

Example 16 comprises the subject matter of example 12, wherein the beam measurement configuration is configured to measure a subset of the plurality of beams.

Example 17 comprises the subject matter of example 12, wherein the beam measurement configuration is configured to measure all of the plurality of beams.

Example 18 comprises the subject matter of example 12, wherein the first BWP is an initial BWP, and the CSI-RS configuration is in the initial BWP.

Example 19 comprises the subject matter of example 18, wherein the processor is further configured to receive the measurement report in the initial BWP.

Example 20 comprises the subject matter of example 12, wherein the processor is further configured to receive the measurement report in the first BWP that is associated with the CSI-RS configuration.

Example 21 comprises the subject matter of any of example(s) 12, wherein the processor is further configured to configure an active BWP, where the active BWP is the second BWP, and receive the measurement report in the active BWP.

Example 22 comprises the subject matter of example 12, wherein the processor is further configured to configure a configured BWP of the plurality of BWPs that is different from the first BWP and second BWP, and receive the measurement report in the configured BWP.

The above description of illustrated aspects of the subject disclosure, including what is described in the Abstract, is not intended to be exhaustive or to limit the disclosed aspects to the precise forms disclosed. While specific aspects and examples are described herein for illustrative purposes, various modifications are possible that are considered within the scope of such aspects and examples, as those skilled in the relevant art can recognize.

In this regard, while the disclosed subject matter has been described in connection with various aspects and corresponding Figures, where applicable, it is to be understood that other similar aspects can be used or modifications and additions can be made to the described aspects for performing the same, similar, alternative, or substitute function of the disclosed subject matter without deviating therefrom. Therefore, the disclosed subject matter should not be limited to any single aspect described herein, but rather should be construed in breadth and scope in accordance with the appended claims below.

In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations. In addition, while a particular feature may have been disclosed with respect to only one of several implementations, such feature may be combined with one or more other features of the other implementations as may be desired and advantageous for any given or particular application.

## Claims

1. A baseband processor (204) for a user equipment, UE (200), comprising:
a memory interface (204E); and
processing (304E) communicatively coupled to the memory interface and, while connected to a base station, BS, within a cell of a non-terrestrial network, NTN, and, where the cell comprises a plurality of bandwidth parts, BWPs, associated with a plurality of beams, configured to perform operations comprising:
receiving a signaling from the base station, BS, comprising a channel state indicator reference signal, CSI-RS, configuration associated with a first BWP of the plurality of BWPs, where the CSI-RS configuration comprises a beam measurement configuration for the plurality of beams, and the CSI-RS configuration is received in a second BWP,
switching from the second BWP of the plurality of BWPs to the first BWP according to the CSI-RS configuration and measure one or more of the plurality of beams according to the beam measurement configuration;
generating, for transmission, a measurement report that includes a layer 1 reference signal received power, L1-RSRP, measurement from the measured one or more of the plurality of beams; and
outputting the measurement report on the second BWP,
wherein the operations further comprise selectively receiving an indication to switch to one of the plurality of beams based on the measurement report.

2. The baseband processor of claim 1, wherein the operations further comprise switching from the first BWP to the second BWP and outputting, for transmission, the measurement report on the second BWP.

3. The baseband processor of claim 1, wherein the CSI-RS configuration appears in only a single BWP of the plurality of BWPs within the cell.

4. The baseband processor of claim 1, wherein the operations further comprise measuring a subset of the plurality of beams according to the beam measurement configuration.

5. The baseband processor of claim 1, wherein the operations further comprise measuring all of the plurality of beams according to the beam measurement configuration.

6. A base station, BS, device (512A, 512B), comprising:
a memory interface;
an antenna;
a transceiver interface connected to the antenna; and
a processor communicatively coupled to the memory and transceiver interface configured to:
configure a plurality of bandwidth parts, BWPs, associated with a plurality of beams in a cell associated with a non-terrestrial network, NTN,
generate a channel state indicator reference signal, CSI-RS, configuration associated with a first BWP of the plurality of BWPs, where the CSI-RS configuration comprises a beam measurement configuration for the plurality of beams,
receive a measurement report that includes a layer 1 reference signal received power, L1-RSRP, measurement of one or more of the plurality of beams, wherein the measurement report is received in an initial BWP that is different from the first BWP, wherein the L1-RSRP measurement is received from a user equipment, UE, that has switched from the initial BWP to the first BWP to measure the L1-RSRP; and
selectively generate an indication to switch to one of the plurality of beams based on the measurement report.

7. The BS of claim 6, wherein only a single BWP of the plurality of BWPs comprises the CSI-RS configuration.

8. The BS of claim 6, wherein the plurality of BWPs associated with the plurality of beams is configured with a frequency reuse factor equal to or greater than one.

9. The BS of claim 6, wherein the beam measurement configuration is configured to measure a subset of the plurality of beams.

10. The BS of claim 6, wherein the beam measurement configuration is configured to measure all of the plurality of beams.

## Patentansprüche

1. Basisbandprozessor (204) für eine Benutzereinrichtung, UE, (200), umfassend:
eine Speicherschnittstelle (204E); und
eine Verarbeitung (304E), die mit der Speicherschnittstelle kommunikativ gekoppelt ist und, während sie mit einer Basisstation, BS, innerhalb einer Zelle eines nicht-terrestrischen Netzwerks, NTN, verbunden ist und wobei die Zelle eine Vielzahl von Bandbreitenteilen, BWPs, umfasst, die einer Vielzahl von Strahlen zugeordnet sind, konfiguriert ist, um Vorgänge durchzuführen, umfassend:
Empfangen einer Signalisierung von der Basisstation, BS, umfassend eine Kanalzustandsindikator-Referenzsignal-Konfiguration, CSI-RS-Konfiguration, die einem ersten BWP der Vielzahl von BWPs zugeordnet ist, wobei die CSI-RS-Konfiguration eine Strahlmessungskonfiguration für die Vielzahl von Strahlen umfasst und die CSI-RS-Konfiguration in einem zweiten BWP empfangen wird,
Umschalten von dem zweiten BWP der Vielzahl von BWPs zu dem ersten BWP gemäß der CSI-RS-Konfiguration und Messen eines oder mehrerer der Vielzahl von Strahlen gemäß der Strahlmessungskonfiguration;
Erzeugen, für eine Übertragung, eines Messberichts, der eine Messung einer empfangenen Leistung eines Schicht-1-Referenzsignals, L1-RSRP-Messung, von dem einen oder den mehreren gemessenen der Vielzahl von Strahlen einschließt; und
Ausgeben des Messberichts auf dem zweiten BWP,
wobei die Vorgänge ferner ein selektives Empfangen einer Anzeige, auf einen der Vielzahl von Strahlen basierend auf dem Messbericht umzuschalten, umfassen.

2. Basisbandprozessor nach Anspruch 1, wobei die Vorgänge ferner das Umschalten von dem ersten BWP zu dem zweiten BWP und das Ausgeben, für die Übertragung, des Messberichts auf dem zweiten BWP umfassen.

3. Basisbandprozessor nach Anspruch 1, wobei die CSI-RS-Konfiguration nur in einem einzigen BWP der Vielzahl von BWPs innerhalb der Zelle erscheint.

4. Basisbandprozessor nach Anspruch 1, wobei die Vorgänge ferner das Messen einer Teilmenge der Vielzahl von Strahlen gemäß der Strahlmessungskonfiguration umfassen.

5. Basisbandprozessor nach Anspruch 1, wobei die Vorgänge ferner das Messen aller der Vielzahl von Strahlen gemäß der Strahlmessungskonfiguration umfassen.

6. Basisstationsvorrichtung, BS-Vorrichtung, (512A, 512B), umfassend:
eine Speicherschnittstelle;
eine Antenne;
eine Sendeempfängerschnittstelle, die mit der Antenne verbunden ist; und
einen Prozessor, der mit dem Speicher und der Sendeempfängerschnittstelle kommunikativ gekoppelt und konfiguriert ist zum:
Konfigurieren einer Vielzahl von Bandbreitenteilen, BWPs, die einer Vielzahl von Strahlen in einer Zelle zugeordnet sind, die einem nicht-terrestrischen Netzwerk, NTN, zugeordnet ist,
Erzeugen einer Kanalzustandsindikator-Referenzsignal-Konfiguration, CSI-RS-Konfiguration, die einem ersten BWP der Vielzahl von BWPs zugeordnet ist, wobei die CSI-RS-Konfiguration eine Strahlmessungskonfiguration für die Vielzahl von Strahlen umfasst,
Empfangen eines Messberichts, der eine Messung der empfangenen Leistung des Schicht-1-Referenzsignals, L1-RSRP-Messung, von einem oder mehreren der Vielzahl von Strahlen einschließt, wobei der Messbericht in einem anfänglichen BWP empfangen wird, der sich von dem ersten BWP unterscheidet, wobei die L1-RSRP-Messung von einer Benutzereinrichtung, UE, empfangen wird, die von dem anfänglichen BWP zu dem ersten BWP umgeschaltet hat, um die L1-RSRP zu messen; und
selektiven Erzeugen einer Anzeige, auf einen der Vielzahl von Strahlen basierend auf dem Messbericht umzuschalten.

7. BS nach Anspruch 6, wobei nur ein einziger BWP der Vielzahl von BWPs die CSI-RS-Konfiguration umfasst.

8. BS nach Anspruch 6, wobei die Vielzahl von BWPs, die der Vielzahl von Strahlen zugeordnet sind, mit einem Frequenzwiederverwendungsfaktor konfiguriert ist, der gleich oder größer als eins ist.

9. BS nach Anspruch 6, wobei die Strahlmessungskonfiguration konfiguriert ist, um eine Teilmenge der Vielzahl von Strahlen zu messen.

10. BS nach Anspruch 6, wobei die Strahlmessungskonfiguration konfiguriert ist, um alle der Vielzahl von Strahlen zu messen.

## Revendications

1. Processeur de bande de base (204) pour un équipement d'utilisateur, UE (200), comprenant :
une interface de mémoire (204E) ; et
un traitement (304E) couplé en communication à l'interface de mémoire et, alors qu'il est connecté à une station de base, BS, au sein d'une cellule d'un réseau non terrestre, NTN, et, où la cellule comprend une pluralité de parties de largeur de bande, BWP, associées à une pluralité de faisceaux, configurées pour effectuer des opérations comprenant :
la réception d'une signalisation provenant de la station de base, BS, comprenant une configuration de signal de référence d'indicateur d'état de canal, CSI-RS, associée à une première BWP de la pluralité de BWP, où la configuration CSI-RS comprend une configuration de mesure de faisceau pour la pluralité de faisceaux, et la configuration CSI-RS est reçue dans une seconde BWP,
la commutation de la seconde BWP de la pluralité de BWP à la première BWP selon la configuration CSI-RS et la mesure d'un ou plusieurs de la pluralité de faisceaux selon la configuration de mesure de faisceau ;
la génération, pour transmission, d'un rapport de mesure qui comporte une mesure de puissance reçue de signal de référence de la couche 1, L1-RSRP, à partir du ou des faisceaux mesurés de la pluralité de faisceaux mesurés ; et
la sortie du rapport de mesure sur la seconde BWP,
dans lequel les opérations comprennent en outre la réception sélective d'une indication permettant de commuter à l'un de la pluralité de faisceaux sur la base du rapport de mesure.

2. Processeur de bande de base selon la revendication 1, dans lequel les opérations comprennent en outre le fait de passer de la première BWP à la seconde BWP et à émettre, en vue de sa transmission, le rapport de mesure sur la seconde BWP.

3. Processeur de bande de base selon la revendication 1, dans lequel la configuration CSI-RS n'apparaît que dans une seule BWP de la pluralité de BWP au sein de la cellule.

4. Processeur de bande de base selon la revendication 1, dans lequel les opérations comprennent en outre la mesure d'un sous-ensemble de la pluralité de faisceaux conformément à la configuration de mesure de faisceaux.

5. Processeur de bande de base selon la revendication 1, dans lequel les opérations comprennent en outre la mesure de l'ensemble de la pluralité de faisceaux selon la configuration de mesure de faisceaux.

6. Dispositif de station de base, BS (512A, 512B) comprenant :
une interface mémoire ;
une antenne ;
une interface émetteur-récepteur connectée à l'antenne ; et
un processeur couplé en communication à la mémoire et à l'interface de l'émetteur-récepteur, configuré pour :
configurer une pluralité de parties de largeur de bande, BWP, associées à une pluralité de faisceaux dans une cellule associée à un réseau non terrestre, NTN,
générer une configuration de signal de référence d'indicateur d'état de canal, CSI-RS, associée à une première BWP de la pluralité de BWP, où la configuration CSI-RS comprend une configuration de mesure de faisceau pour la pluralité de faisceaux,
recevoir un rapport de mesure qui comporte une mesure de puissance reçue de signal de référence de couche 1, L1-RSRP, d'un ou des faisceaux de la pluralité, dans lequel le rapport de mesure est reçu dans une BWP initiale qui est différente de la première BWP, dans lequel la mesure L1-RSRP est reçue d'un équipement utilisateur, UE, qui est passé de la BWP initiale à la première BWP pour mesurer la L1-RSRP ; et
générer sélectivement une indication pour passer à l'un de la pluralité de faisceaux sur la base du rapport de mesure.

7. BS selon la revendication 6, dans laquelle une seule BWP de la pluralité de BWP comprend la configuration CSI-RS.

8. BS selon la revendication 6, dans laquelle la pluralité de BWP associée à la pluralité de faisceaux est configurée avec un facteur de réutilisation de fréquence égal ou supérieur à un.

9. BS selon la revendication 6, dans laquelle la configuration de mesure de faisceau est configurée pour mesurer un sous-ensemble de la pluralité de faisceaux.

10. BS selon la revendication 6, dans laquelle la configuration de mesure de faisceau est configurée pour mesurer l'ensemble de la pluralité de faisceaux.
